Europäisches Patentamt

European Patent Office

Office européen des brevets

(19)

(11) Veröffentlichungsnummer: **0 182 283**
**B1** ⸱

(12) **EUROPÄISCHE PATENTSCHRIFT**

(45) Veröffentlichungstag der Patentschrift: **08.08.90**

(21) Anmeldenummer: **85114464.2**

(22) Anmeldetag: **14.11.85**

(51) Int. Cl.⁵: **B 29 C 45/40, B 29 C 45/04, B 29 C 45/17**

(54) **Formschliesseinheit an Kunststoffspritzgiessmaschine.**

(30) Priorität: **15.11.84 DE 3441717**

(43) Veröffentlichungstag der Anmeldung:
**28.05.86 Patentblatt 86/22**

(45) Bekanntmachung des Hinweises auf die
Patenterteilung:
**08.08.90 Patentblatt 90/32**

(84) Benannte Vertragsstaaten:
**AT CH DE FR GB IT LI NL**

(56) Entgegenhaltungen:
**EP-A-0 069 221
DE-A-2 421 811
DE-B-1 264 751
DE-B-2 834 415
FR-A-2 536 697
US-A-3 647 309
US-A-3 726 625
US-A-4 500 275**

(73) Patentinhaber: **Hehl, Karl
Arthur-Hehl-Strasse 32
D-7298 Lossburg 1 (DE)**

(72) Erfinder: **Hehl, Karl
Arthur-Hehl-Strasse 32
D-7298 Lossburg 1 (DE)**

(74) Vertreter: **Mayer, Friedrich Dr. et al
Westliche 24
D-7530 Pforzheim (DE)**

Courier Press, Leamington Spa, England.

**Beschreibung**

Die Erfindung bezieht sich auf eine Formschließeinheit entsprechend dem Oberbegriff des Patentanspruches 1.

Unter einem asymmetrisch zur Spritzachse ausgebildeten Kupplungsraum im Sinne des Oberbegriffes ist ein Kupplungsraum zu verstehen, der asymmetrisch zu einer vertikalen Symmetrieebene der Formschließeinheit angeordnet ist, indem er sich ausgehend von dieser Symmetrieebene überwiegend nach einer Seite hin erstreckt.

Bei einer bekannten Formschließeinheit dieser Art (DE—C—32 43 991) kann die Kolbenstange mit ihren Hintergriffsorganen während des Quertransportes der Spritzgießform ohne Gefahr einer Kollision mit den Hintergriffsorganen der Spritzgießform in den Kupplungsraum axial eingefahren werden.

Es ist auch bekannte, eine vertikale Formschließeinheit mit einem Schiebetisch zum horizontalen Verschieben zweier Gießformhälften auszurüsten, die wechselweise mit Eingelteilen zu bestücken sind und wechselweise mit Hilfe einer Kolben-Zylinder-Einheit vom Schiebetisch auf die horizontale Spannfläche des bewegbaren Formträgers verschoben werden. Zu diesem Zweck ist die Kolbenstange der Kolben-Zylinder-Einheit durch seitliches Einfahren ihres als Kupplungskopf ausgebildeten freien Endes in eine horizontale Nut eines auf die Gießformhälfte aufgesetzten Kupplungsteiles kuppelbar. Dabei erfolgt die Kupplung bei freistehenden Kupplungsorganen außerhalb des Körpers der Gießformhälfte (DE—A—24 21 811).

Ferner ist es bekannt, Formschließeinheiten an Kunststoff-Spritzgießmaschinen so auszubilden, daß die Angußteile von den Spritzlingen mittels einer Separierungsvorrichtung durch zeitlich versetztes Aufweisen aus der Spritzgießform voneinander getrennt werden können. Hierfür ist in der Spritzgießform ein gesondertes Auswerferorgan für die Angußteile vorgesehen, auf welches die Auswerferplatte des Auswerfers der Spritzgießform erst in einer letzten Bewegungsphase auftritt und in Auswurfposition schiebt. Das als Auswerferstift ausgebildete Auswerferorgan endet rückseitig in einer im Hubraum der Spritzgießform vor der Auswerferplatte angeordneten Führungsplatte, für deren Rückführung in Ausgangslage besondere Einrichtungen erforderlich sind. Eine wesentliche Veränderung der Abmesungen, insbesondere der Bautiefe der Spritzgießform ist bei einer solchen Ausbildung unvermeidlich (US—A—3,776,675).

Bei einer weiteren bekannten Separierungsvorrichtung zum Trennen der Angußteile von den Spritzlingen (DE—A—2 516 917) wird das Angußteil von einem 'Auswerfer im Auswerfer' ausgeworfen, der mit einem gesonderten Antrieb versehen ist.

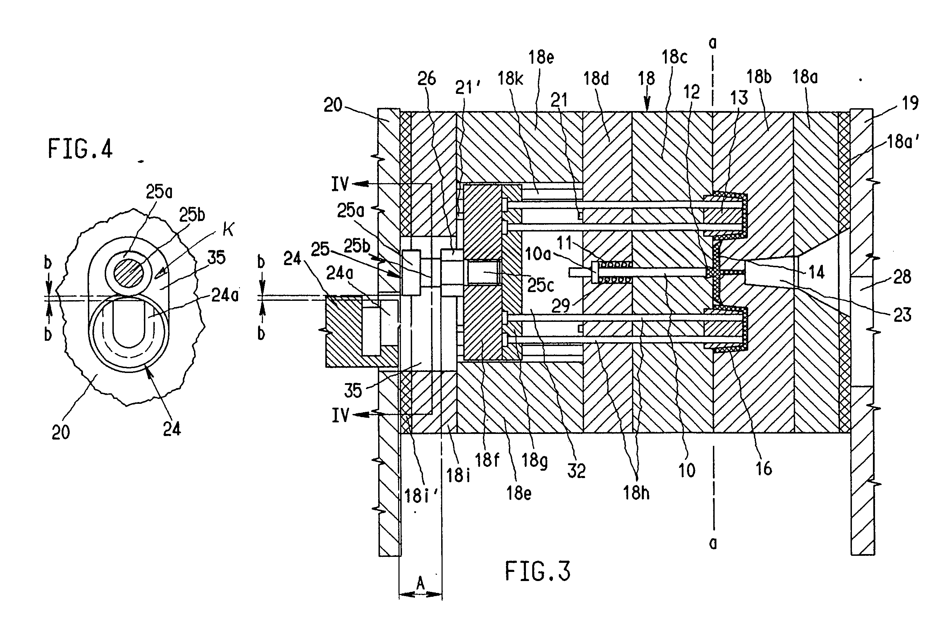

Im übrigen sind Vorrichtungen für das zeitlich versetzte Auswerfen von Angußteil und Spritzling in unterschiedlichen Ausführungen bekannt (z.B. DE—C—752 458), wobei auch ein gesonderter, im Hubraum der Auswerferplatte frei endigender und mittels Radialflansch in einer Sacklochbohrung eines zylindrischen Stempels der Spritzgießform gefangener Auswerferstift für den Angußteil Verwendung finden kann ("Plastverarbeiter" 1957/1, S.13—15, insbesonder Abb. 4).

Ausgehend von dem genannten Stand der Technik liegt der Erfindung die Aufgabe zugrunde, eine Formschließeinheit der eingangs genannten Gattung derart weiterzubilden, daß sowohl ein das Kuppeln bewirkender unterbrechungfreier Quertransport der Spritzgießform als auch das Separieren der Angußteile von den Spritzlingen durch axiale Bewegungsphasen der Kolbenstange in Abhängigkeit von einer, eine Wegmeßeinrichtung umfassenden einfachen Steuervorrichtung bewirkt werden können, ohne daß es nennenswerter Änderungen an den Abmessungen der aus genormten Bauteilen aufgebauten Spritzgießform bedarf.

Diese Aufgabe wird erfindungsgemäß durch die im Kennzeichen des Patentanspruches 1 genannten Merkmale gelöst.

Die Kupplung ergibt sich durch den beim Gießformwechsel ohnehin erforderlichen Quertransport der Spritzgießform. Dabei können sich die axiale Einfahrbewegung der Kolbenstange und der Quertransport der Spritzgießform zeitlich überschneiden. Dabei ist auch bei geringer Asymmetrie des Kupplungsraumes eine Kollision zwischen Kolbenstange und Spritzgießform ausgeschlossen, wenn die Geschwindigkeit des Quertransportes in der letzten bzw. ersten Phase im Vergleich zur Geschwindigkeit der Kolbenstange wesentlich verringert ist. Bei stark asymmetrischem oder gar auf einer Seite der Spritzgießform offenem Kupplungsraum kann der Quertransport der Spritzgießform jedoch durchgehend mit verhältnismäßig hoher Geschwindigkeit erfolgen. In der letzten Bewegungsphase der Kolbenstange wird das Angußteil mittels des Auswerferstiftes ausgestoßen.

Ein weiterer Vorteil der erfindungsgemäßen Ausbildung besteht darin, daß die Spritzgießform ohne wesentliche bauliche Änderungen an ihren genormten Bauteilen, also auch ohne nennenswerte Änderungen ihrer Abmessungen, insbesondere ohne Erhöhung ihrer Bautiefe für das Separieren der Angußteile von den Spritzlingen ausgebildet bzw. nachgerüstet werden kann.

Nachstehend wird die Erfindung anhand der Zeichnungen erläutert.

Es zeigen:

Fig. 1 einen Ausschnitt aus der Formschließeinheit im Bereich einer auf dem bewegbaren Formträger aufgespannten Gießformhälfte angedeuteter Lage des Kupplungsraumes,

Fig. 2 einen Ausschnitt aus der Formschließeinheit im Bereich der zwischen den Formträgern festgespannten, horizontal geschnittenen, in Arbeitsposition befindliche, geschlossenen Spritzgießform,

Fig. 3 den Ausschnitt gemäss Fig. 2 beim Quertransport der Spritzgießform, wobei die Spritzgießform gerade in ihre letzte, sich mit der Einfahrbewegung der Hintergriffsorgane der Kolgenstange zeitlich überschneidenden Bewegungsphase eintritt,

Fig. 4 einen Schnitt nach Linie IV—IV von Fig. 3,

Fig. 5 einen Ausschnitt aus der geöffneten, vertikal geschnittenen Formschließeinheit beim Ausstoß der Spritzlinge,

Fig. 6 einen Teil des Ausschnittes gemäss Fig. 5 beim Ausstoß des Angußteiles,

Fig. 7 ein die Arbeitsweise der Steuereinrichtung verdeutlichendes Weg- Zeit- Diagramm,

Fig. 8 eine Variante der Formschließeinheit in einer Darstellung gemäss Fig. 2 und

Fig. 9 die Anordnung gemäss Fig. 8 in einer Ansicht aus Richtung Y.

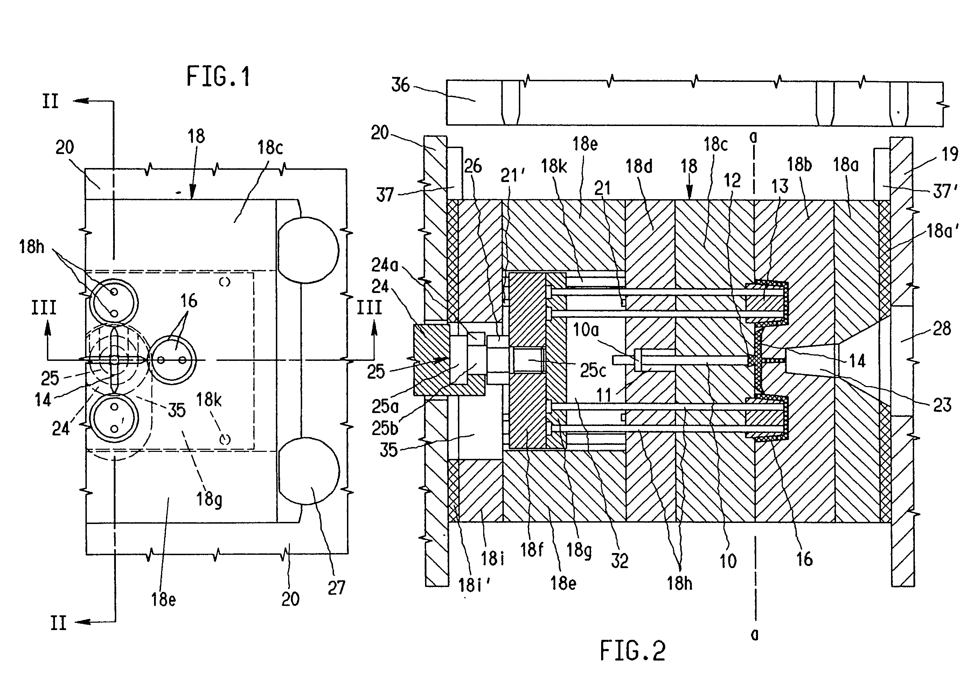

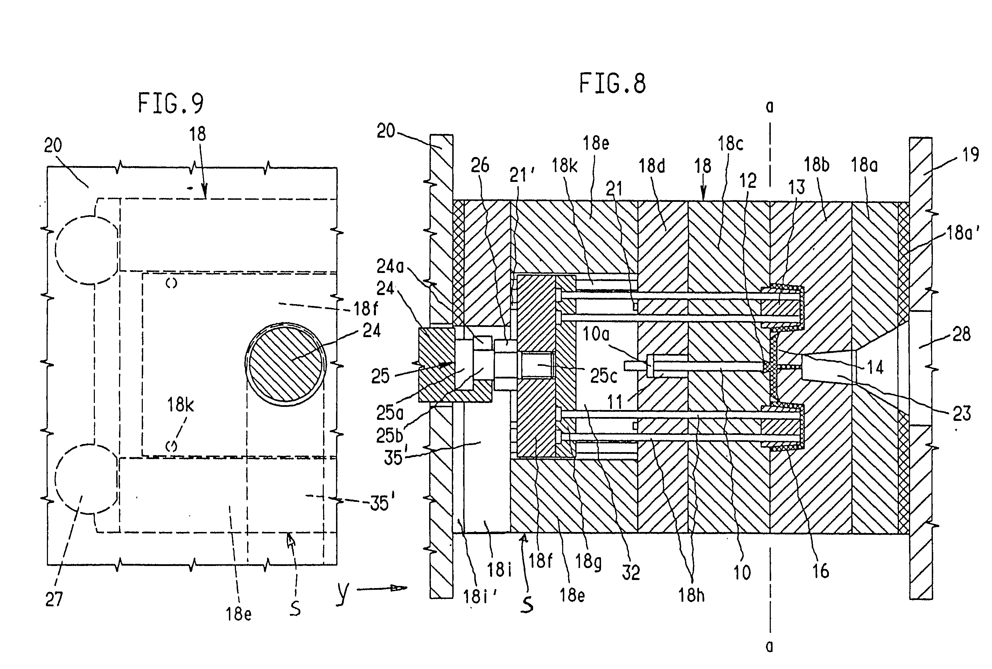

Die an einer Kunststoff-Spritzgießmaschine mit zentralem Rechner 31 angeordnete Formschließeinheit ist mit einer Gießformwechselvorrichtung ausgerüstet. Letztere umfaßt einen neben dem Spannraum angeordneten Gießformwechseltisch 36 und eine Transportbahn, auf welcher die Spritzgießform 18 unmittelbar an der Spannfläche des bewegbaren Formträgers 20 vom Gießformwechseltisch in den Spannraum horizontal transportierbar ist (Quertransport). Die Transportbahn ist durch Stützelemente 37, 37' gebildet, die an den Formträgern 20, 19 befestigt sind. Beim Quertransport ist der bewegbare Formträger 20 auf einen derartigen minimalen Abstand zum stationären Formträger 19 eingestellt, daß gerade noch ein Quertransport der Spritzgießform 18 ohne nennenswerte Behinderung durch Friktionen an den Spannflächen der Formträger möglich ist. Die Gießformwechselvorrichtung umfaßt ferner eine Kupplung zum Ankuppeln und Abkuppeln der Auswerfers der Spritzgießform von ihrer antreibenden, in der Spritzachse am bewegbaren Formträger 20 befestigten Kolben-Zylinder-Einheit. Die Kupplung ist durch Hintergriffsorgane 25a an der Spritzgießform 18 und Hintergriffsorgane 24a an der Kolbenstange 24 der Kolben-Zylinder-Einheit gebildet. Die Hintergriffsorgane 25a und 24a hintergreifen sich im Gefolge des Quertransportes in einem Kupplungsraum 35 innerhalb der benachbarten Befestigungsplatte 18i, die mit einer Isolierplatte 18i' armiert ist. Der Kupplungsraum 35 ist derart asymmetrisch zur Spritzachse ausgebildet, daß die Hintergriffsorgane 24a der Kupplungsstange 24 neben den Hintergriffsorganen 25a der Spritzgießform 18 in den Kupplungsraum 35 einfahrbar sind. Wie insbesondere aus den Fig. 1, 9 ersichtlich, ist die aus genormten Bauteilen aufgebaute Spritzgießform 18 mit ihren Isolierplatten 18a' und 18i' armierten Befestigungsplatten 18 und 18i versehen, welche den Körper der Spritzgießform unten und oben geringfügig überragen. Diese Befestigungsplatten sind von Spannbolzen 27 hintergriffen, durch welche die Gießformhälften an den Formträgern 19, 20 durch hydraulische Mittel gehalten sind.

Die Spritzgießform 18 umfaßt ferner eine an der Befestigungsplatte 18a anliegende und an die Trennebene a—a angrenzende Fassonplatte 18b, die im Bereich von Einarbeitungen die Formhohlräume 22, die Verteilerkanäle 23a und den Angußkanal 23 begrenzt. Eine von einer Abstützplatte 18d stabilisierte Konturenplatte 18c grenzt andererseits an die Trennebene a—a an und ist mit Formkernen 13 bestückt, welche die Formhohlräume 22 begrenzen. Zwischen der Befestigungsplatte 18i und der Abstützplatte 18d sind zur Bildung eines Hubraumes 32 Abstandsstücke 18e angeordnet. In dem Hubraum 32 ist die Auswerferplatte 18f mit Abdeckplatte 18g auf Führungsstiften 18k in Schließrichtung der Spritgießform verschiebbar gelagert und mit Auswerferstößeln 18h bestückt, welche die Abstützplatten 18d, die Konturenplatte 18c und die Formenkerne 13 durchsetzen. Der Hub der Auswerferplatte 18f mit Abdeckplatte 18g ist durch Anschlagelemente 21, 21' begrenzt. Die durch die Auswerferplatte 18f mit Deckplatte 18g und die Auswerferstößel 18h gebildete Auswerfereinrichtung ist über die Kolbenstange 24 einer hydraulischen Kolben-Zylinder-Einheit in zeitlich getrennten Bewegungsphasen antreibbar. Die Kolbenstange 24 ist über die Kupplung mit der Auswerferplatte 18f lösbar verbunden. Die Kupplung umfaßt ein radial symmetrisches Kupplungselement 25, das über einen Gewindezapfen 25c mit der Auswerferplatte 18f verschraubt und durch eine Kontermutter 26 gesichert ist. In Kupplungsposition ist ein Kupplungskopf (Hintergriffsorgane 25a) des Kupplungselemente 25 im Bereich seines Halses 25b von horizontalen Hintergriffsschenkeln (Hintergriffsorgane 24a) der Kupplungsstange 24 in dem Kupplungsraum 35 hintergriffen, der durch eine asymmetrische Ausnehmung in der Befestigungsplatte 18i mit Isolierplatte 18i' gebildet ist. Die Abkupplung erfolgt im Rahmen eines Gießformwechsels durch den Quertransport der Spritzgießform, bei welcher der Kupplungskopf 25a aus dem Bereich der Hintergriffsschenkel 24a gelangt, und einen anschließenden Rückwärtshub der Kolbenstange 24.

Gekuppelt wird durch die analogen Bewgungsschritte in umgekehrter Reihenfolge.

Das Auswerferorgan für das Angußteil 14 ist ein gesonderter, in der Konturenplatte 18c und der Abstützplatte 18d geführter Auswerferstift 10, der im Hubraum 32 frei endigt. Der Auswerferstift 10 ist mittels Radialflansch 10a in einer Sacklochbohrung 11 der Konturenabstützplatte 18d mit axialem Spiel für den Auswerferhub gefangen. Die Sacklochbohrung 11 mündet in der Fuge zwischen der Konturenplatte 18c und der Konturenabstützplatte 18d. Der zylindrische Auswerferstift 10 weist vor und hinter dem Radialflansch 10a einen gleichen Durchmesser von cirka 18 mm auf. Er begrenzt mit seiner vorderen Stirnkante den mit Hinterschnitt 12 versehenen Verteilerkanal 23a, dessen Verteilerkanäle über Tunnel 15 für Tunnelangüsse in die Formhohlräume 22 einmünden.

Im Beispiel der Fig. 3 und 4 ist der Auswerferstift 10 von einer als Rückstellfeder dienenden Schraubenfeder 29 umschlossen. Diese ist einenends an der Konturenplatte 18c widergelagert und liegt anderenends am Radialflansch 10a an. Der Auswerferstift 10 ist durch eine Einrichtung steuerbar, die eine Wegmeßeinrichtung 30 und einen die Kolben-Zylinder-Einheit steuernden Rechner 31 umfaßt, dessen gespeicherte Zeitprogramme in Abhängigkeit von den Signalen der Wegmeßeinrichtung 30 abrufbar sind. Durch die Wegmeßeinrichtung 30 sind alle Bewegungsphasen der Auswerfereinrichtung erfaßbar. Sie ist zu diesem Zweck der Kolbenstange 24 zugeordnet.

Die elektrischen Signale der Wegmeßeinrichtung 30 werden durch einen Drehpotentiometer geliefert, der durch die Axialbewegung der Kolbenstange 24 angetrieben ist. Eine solche Wegmeßeinrichtung ist an sich bekannt (DE—AS 28 34 415.2).

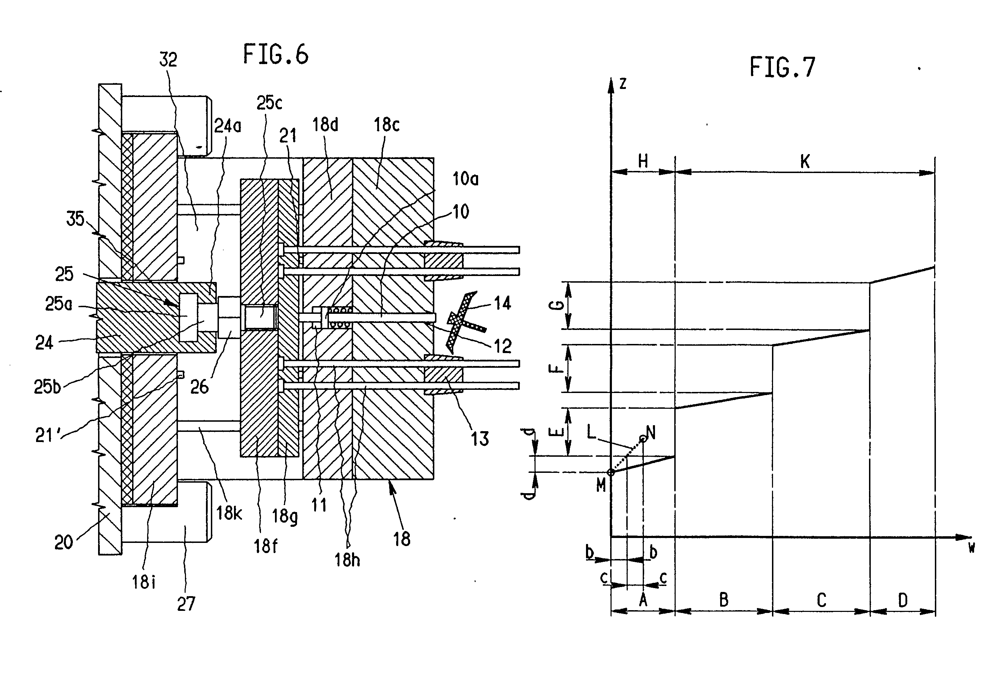

Das Weg-Zeit-Diagramm gemäß Fig. 7 verdeutlicht den Ablauf von Bewegungsphasen B, C, D der Auswerfereinrichtung, denen je Zeitspannen E, F, G eines Stillstandes (Pausen) vorgeschaltet sind. Die Pausen werden zum Vollzug von Operationen benötigt, die zwischen den Bewegungsphasen liegen.

Die Bewegungsphase A beinhaltet eine Operation der Gießformwechsels H, wobei die Bewegungsphasen, B, C, D dem zeitlich versetzten Auswerfen und dem anschließenden Separieren von Spritzlingen und Angüssen im Spritzzyklus K dienen. Bei dem Weg-Zeit-Diagramm wird von einem Zeitpunkt des Betriebs ausgegangen, bei welchem ein automatischer Gießformwechsel noch nicht vollständig vollzogen ist, also demzufolge zwischen den Formträgern 19, 20 sich noch keine Spritzgießform 18 befindet. Im Zuge der letzten Phase des Gießformwechsels H wird die Kolbenstange 24 in den Kupplungsraum 35 eingefahren und die quer bewegte Spritzgießform angekuppelt. Das Ende der Einfahrbewegung ist wegabhängig von der Wegmeßeinrichtung 30 bestimmt, die an den Rechner 31 ein diesbezügliches Signal liefert. Durch das Signal wird die vorprogrammierte Pause E aus dem Speicher des Rechners 31 abgerufen und die Bewegungsphase B ausgelöst, die zum Auswurf der ersten Spritzlinge führt und wiederum wegabhängig von der Wegmeßeinrichtung 30 durch ein Signal an den Rechner 31 beendet wird. Durch das Signal wird die vorprogrammierte Pause F aus dem Speicher abgerufen, in welcher die ersten Spritzlinge über die mechanische Weiche in einen ersten Sammelbehälter abgeführt werden. Am Ende der Pause wird die Bewegungsphase C programmabhängig abgeleitet, indem der Kolben der Kolben-Zylinder-Einheit erneut mit Druckmedium beaufschlagt wird. Diese Bewegungsphase wird wiederum wegabhängig von der Wegmeßeinrichtung 30 beendet, die mittels Signal die programmierte Pause G auslöst. Diese reicht zeitlich aus, um anders gestaltete Spritzlinge (weicht insoweit vom Ausführungsbeispiel der Fig. 1—4 ab) über die Weiche in einem zweiten Behälter abzusondern. Sodann wird vom Rechner 31 programmabhängig die Bewegungsphase D eingeleitet, in deren Verlauf die Angüsse ausgestoßen werden (Fig. 6), um über die mechanische Weiche in einem dritten Behälter gesammelt zu werden.

In der Variante gemäß Fig. 2 wird der Auswerferstift 10 ausschließlich durch den Staudruck des plastischen Materials, in der Variante nach den Fign. 3, 4 unter Mitwirkung der Rückstellfeder 29 in Ausgangslage zurückgeführt.

Der automatische Gießformwechsel wird durch den vom Rechner gesteuerten Quertransport der Spritzgießform 18 eingeleitet, durch welchen die Hintergriffsorgane 24a vom Hintergriff der Hintergriffsorgane 24a befreit, was die Abkupplung der Kolbenstangen 24 von der Auswerferplatte 18f zur Folge hat. Danach erfolgt eine zur Richtung der Bewegungsphase A gegensätzlich gerichtete, von der Wegmeßeinrichtung 30 in Verbindung mit dem Rechner 31 gesteuerte Bewegungsphase, durch welche die Hintergriffsorgane 24a bei fortdauerndem Quertransport der Spritzgießform axial aus dem Kupplungsraum 35 herausgeführt werden. Die aus Weg-Meß-Einrichtung 30 und Rechner 31 bestehende Steuereinrichtung 30, 31 ist also gleichermaßen zur Steuerung der Auswerfereinrichtung als auch zur Steuerung wenigstens einer Grundoperation des Gießformwechsels, nämlich zur Ankupplung bzw. Abkupplung des Auswerfers der Spritzgießform 18 von der antreibenden Kolbenstange 24 bei unterbrechungsfreiem Quertransport der Spritzgießform 18 befähigt. Im Weg-Zeit-Diagramm (Fig. 7) ist mit dem als kleiner Kreis verdeutlichten Punkt M der Starpunkt und der Zeitpunkt des Startes der Kolbenstange 24 aus ihrer Ausgangslage gegeben. Dieser Punkt M ist im Diagramm zugleich der Umschaltpunkt, in welchem der Quertransport L (punktierte Linie) auf eine wesentlich geringere Geschwindigkeit gesteurt wird, wobei dieser Quertransport im Beispiel des Diagramms ohne hin mit einer etwas geringeren Geschwindigkeit vonstatten geht als der Axialhub der Kolbenstange in der Bewegungsphase A. Im Punkt M haben die Spritzgießform 18 und die Kolbenstange 24 etwa die in Fig. 3 gezeigte Lage, in welcher der Axialhub der Kolbenstange 24 gerade beginnt und die Spritzgießform 18 gerade auf geringere Geschwindigkeit umgeschaltet wird.

Die Zeit d—d in welcher die Kolbenstange 24 die Bewegungsphase A bewältigt, kann in keinem Falle größer sein als die Zeit, welche die Spritzgießform 18 für die Teilstrecke b—b geringerer Geschwindigkeit benötigt. Dies ergibt sich insbesondere aus einem Vergleich der Fig. 7, 3, in welchen die Teilstrecke b—b gleichermaßen angegeben ist. Durch die zweite Teilstrecke c—c geringerer Geschwindigkeit der Spritzgießform 18 wird der gegenseitige Hintergriff der Hintergriffsorgane 24a und 24a von Spritzgießform 18 und Kolbenstange 24 realisiert.

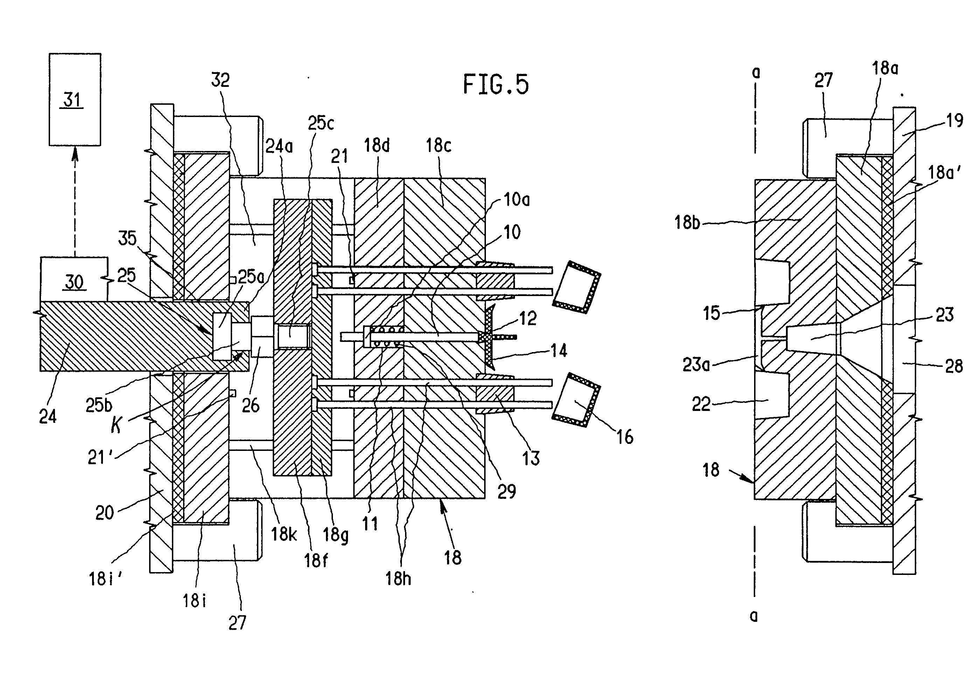

Das Ausführungsbeispiel gemäß den Figuren 8, 9 unterscheidet sich vom Ausführungsbeispiel der Figuren 1 bis 7 dadurch, daß der Kupplungsraum 35' in der senkrecht zur Quertransport-Richtung der Spritzgießform 18 liegenden Seitenwandung S des Körpers der Spritzgießform 18 frei mündet und daß die Kolbenstange 24 auch in rückwärtiger Ausgangsstellung innerhalb des Kupplungsraumes K' endet. Bei einer solchen Ausbildung ergibt sich allerdings eine gewisse statische Schwächung der Spritzgießform, so daß gegebenenfalls die Platten der Spritzgießform stärker ausgelegt sein müssen.

Da beim Ausführungsbeispiel der Figuren 8, 9 die Hintergriffsorgane 24a der Kupplungsstange 24 auch beim Quertransport der Spritzgießform 18 sich innerhalb des Kupplungsraumes 35' in einer kupplungsgerechten Position befinden, erübrigt sich das beim Ausführungsbeispiel der Figuren 1—7 für die Kupplung erforderliche Einfahren der Kupplungsstange 24 in den Kupplungsraum. Insoweit stellt die rückwärtige Ausgangsposition der Kupplungsstange 24 zugleich deren Kupplungsposition dar.

**Patentansprüche**

1. Formschließeinheit an Kunststoff-Spritzgießmaschine mit zentralem Rechner (31) und Gießform-Wechselvorrichtung, die einen neben dem Spannraum angeordneten Gießformwechseltisch (36) umfaßt, von welchem die Spritzgießform (18) unmittelbar an der Spannfläche des bewegbaren Formträgers (20) in den Spannraum horizontal transportierbar (Quertransport) ist, und die ferner eine Kupplung (K) zum Abkuppeln des Auswerfers der Spritzgießform (18) von einer am bewegbaren Formträger (20) befestigten Kolben-Zylinder-Einheit (Kolbenstange 24) aufweist, welche Kupplung (K) durch an der Spritzgießform (18) und an der Kolbenstange (24) der Kolben-Zylinder-Einheit angeordnete Hintergriffsorgane (25a, 24a) gebildet ist, die sich im Gefolge des Quertransportes der Spritzgießform (18) in einem innerhalb der Spritzgießform (18) liegenden asymmetrischen Kupplungsraum (35) hintergreifen, dadurch gekennzeichnet, daß eine durch den Rechner (31) und eine Wegmeßeinrichtung (30) gebildete Steuereinrichtung (30, 31) vorgesehen ist, durch welche der Quertransport der Spritzgießform (18) und die Axialbewegung der Kolbenstange (24) aufeinander abstimmbar sind, und durch welche in der letzten Bewegungsphase (D) Angußteile (14) mittels eines Auswerferstiftes (10) ausstoßbar sind der mittels Radialausleger (Radialflansch 10a) in der Bohrung (11), einer Platte (18d), der Spritzgießform (18) gefangen ist und im Abstand von der in Ausgangsposition befindlichen Auswerferplatte (18f, 18g) endigt, wobei der Kupplungsraum (35; 35') eine derartige Asymmetrie aufweist, daß ein umterbrechungsfreier Quertransport in einer Hintergriffsposition der Hintergriffsorgane (25a, 24a) endet.

2. Formschließeinheit nach Patentanspruch 1, dadurch gekennzeichnet, daß die Sacklochbohrung (11) in der Konturenabstütztplatte (18d) angeordnet ist und in der Fuge zwischen Konturenplatte (18b) und Konturenabstützplatte (18c) mündet.

3. Formschließeinheit nach Patentanspruch 2 oder 3, dadurch gekennzeichnet, daß die Kolbenstange (24) der Kolben-Zylinder-Einheit mit der Auswerferplatte (18f, 18g) mittels eines Kupplungselementes (25) kuppelbar ist, dessen Kupplungskopf (Hintergriffsorgan 25a) von horizontalen Hintergriffsschenkeln (Hintergriffsorgane 24a) der Kupplungsstange (24) hintergreifbar ist.

4. Formschließeinheit nach einem der vorhergehenden Ansprüche, dadurch gekennzeichnet, daß die Wegmeßeinrichtung (30) einen durch die Kolbenstange (24) antreibbaren, die Signale liefernden Potentiometer umfaßt.

5. Formschließeinheit nach einem der vorhergehenden Ansprüche, dadurch gekennzeichnet, daß der Kupplungsraum (35' in Fig. 8, 9) in der senkrecht zur Quertransport-Richtung der Spritzgießform (18) liegenden Seitenwandung (S) des Körpers der Spritzgießform (18) frei mündet und daß die Kolbenstange (24) in rückwärtiger Ausgangsstellung innerhalb des Kupplungsraumes endet.

**Revendications**

1. Unité de fermeture de moule pour machine de moulage par injection de matière plastique, comprenant un calculateur central (31) et un dispositif de changement de moule qui comporte une table de changement de moule (36) disposée à côté de l'espace de serrage depuis laquelle le moule de moulage par injection (18) peut être transporté horizontalement dans l'espace de serrage (transport transversal), directement contre la surface de serrage du support de moule mobile (20), et qui présente en outre un accouplement (K) pour désaccoupler l'éjecteur du moule de moulage par injection (18) d'une unité piston-cylindre (tige de piston 24) fixée au support de moule mobile (20), lequel accouplement (K) est constitué par des organes de prise par l'arrière (25a, 24a) qui sont disposés sur le moule de moulage par injection (18) et sur la tige de piston (24) de l'unité piston-cylindre et qui, par suite du transport transversal du moule de moulage par injection (18), viennent en prise par l'arrière dans un espace d'accouplement asymétrique (35) disposé à l'intérieur du moule de moulage par injection (18), caractérisée par le fait qu'il est prévu un dispositif de commande (30, 31) constitué par le calculateur (31) et par un dispositif de mesure du trajet (30) grâce auquel le transport transversal du moule de moulage par injection (18) et le déplacement axial de la tige de piston (24) peuvent être accordés l'un à l'autre, et grâce auquel des carottes (14) peuvent être expulsées dans la dernière phase de déplacement (D) au moyen d'une tige d'éjecteur (10) qui, au moyen d'extensions radiales (bride radiale 10a), est retenue dans le perçage (11) d'une plaque (18d) du moule de moulage par injection (18) et qui se termine à distance de la plaque d'éjecteur (18f, 18g) lorsqu'elle se trouve dans la position de départ, l'espace d'accouplement (35; 35') présentant une asymétrie telle qu'un transport transversal exempt d'interruptions se termine dans une position de prise par l'arrière des organes de prise par l'arrière (25a, 24a).

2. Unité de fermeture de moule selon la revendication 1, caractérisée par le fait que le perçage borgne (11) est disposé dans la plaque d'appui du profil (18d) et qu'il débouche dans le plan de séparation entre la plaque du profil (18c) et la plaque d'appui du profil (18d).

3. Unité de fermeture de moule selon la revendication 2 ou 3, caractérisée par le fait que la tige de piston (24) de l'unité piston-cylindre peut être accouplée à la plaque d'éjecteur (18f, 18g) au moyen d'un élément d'accouplement (25) dont la tête d'accouplement (organe de prise par l'arrière 25a) peut être saisie par l'arrière par des ailes horizontales de prise par l'arrière (organes de prise par l'arrière 24a) de la tige de piston (24).

4. Unité de fermeture de moule selon l'une des revendications précédentes, caractérisée par le fait que le dispositif de mesure du trajet (30) comprend un potentiomètre qui peut être entraîné par la tige de piston (24) et qui fournit les signaux.

5. Unité de fermeture de moule selon l'une des revendications précédentes, caractérisée par le fait que l'espace d'accouplement (35' des figures 8 et 9) débouche librement dans la paroi latérale (S) du corps du moule de moulage par injection (18) qui est disposée perpendiculairement à la direction de transport transversal du moule de moulage par injection (18), et par le fait que la tige de piston (24) se termine à l'intérieur de l'espace d'accouplement dans la position de départ arrière.

**Claims**

1. Mould closing device for a plastics material injection moulding machine, including a central computer (31) and a moulding die change-over arrangement, which comprises a moulding die change-over table (36), which is disposed adjacent the die area and from which the injection moulding die (18) is horizontally conveyable (transverse conveying) into the die area directly at the clamping surface of the displaceable die carrier (20), and said moulding die change-over arrangement additionally comprises a coupling means (K) for disconnecting the ejector of the injection moulding die (18) from a piston-and-cylinder unit (piston rod 24), which is mounted on the displaceable die carrier (20), said coupling means (K) being formed by rearwardly engaging members (25a, 24a), which are disposed on the injection moulding die (18) and on the piston rod (24) of the piston-and-cylinder unit and engage behind one another as a result of the transverse conveying of the injection moulding die (18) in an asymmetrical coupling chamber (35), which is situated internally of the injection moulding die (18), characterised in that a control arrangement (30, 31) is provided, which is formed by the computer (31) and a displacement measuring device (30), and by means of which control arrangement the transverse conveying of the injection moulding die (18) and the axial displacement of the piston rod (24) are adaptable to each other, and by means of which control arrangement sprue pieces (14) are dischargeable in the final displacement phase (D) by means of an ejector pin (10), which is secured in the bore (11) provided in a plate (18d) of the injection moulding die (18) by means of a radial arm (radial flange 10a) and terminates some distance from the ejector plate (18f, 18g), which is in its initial position, the coupling chamber (35; 35') having such asymmetry that continuous transverse conveying terminates in the rearwardly engaging members (25a, 24a) being in their rearwardly engaged position.

2. Mould closing device according to claim 1, characterised in that the blind bore (11) is disposed in the configuration supporting plate (18d) and opens-out in the junction between the configuration plate (18b) and the configuration supporting plate (18c).

3. Mould closing device according to claim 2 or 3, characterised in that the piston rod (24) of the piston-and-cylinder unit is connectable to the ejector plate (18f, 18g) by means of a coupling element (25), the coupling head (rearwardly engaging member 25a) of which coupling element is rearwardly engageable by horizontal, rearwardly engaging legs (rearwardly engaging members 24a) of the piston rod (24).

4. Mould closing device according to one of the preceding claims, charcterised in that the displacement measuring device (30) includes a potentiometer, which is drivable by means of the piston rod (24) and supplies the signals.

5. Mould closing device according to one of the preceding claims, characterised in that the coupling chamber (35' in Figs. 8, 9) opens-out freely in the lateral wall (S) of the body of the injection moulding die (18), which wall extends at right angles to the transverse conveying direction of the injection moulding die (18), and in that the piston rod (24) terminates internally of the coupling chamber in its rear initial position.

FIG.1

FIG.2

FIG.3

FIG.4

FIG.5

FIG.7

FIG.6

FIG.9

FIG.8

EP 0 182 283 B1